# EUROPEAN PATENT APPLICATION

(11) **EP 0 831 484 A1**
(43) Date of publication of application: **25.03.1998**
(21) Application number: 95921142.6
(22) Date of filing: 08.06.1995
(51) Int. Cl.: G11B 20/18

(54) **DATA RECONSTRUCTION METHOD AND DATA STORAGE SYSTEM**

(71) Applicant: Ibm Japan Ltd., Tokyo 106 (JP); International Business Machines Corporation, Armonk, N.Y. 10504 (US)
(72) Inventor: IWASA, Hiroyuki IBM Japan Ltd. Fujisawa-Site, Kanagawa-ken 252 (JP)
(74) Representative: Ling, Christopher John
(86) International application number: JP9501157
(87) International publication number: WO9642083

(57) **Abstract**

An object of this invention is to restrict the degradation of performance in data reconstruction and to eliminate the necessity for additional redundant data storages. If one of a plurality of data storages in a system is out of order, the data in the defective storage are reconstructed on the basis of data in the other storages. The data reconstruction method comprising a step of reading out data from data storages, a step of reading out parity data from a data storage storing the parity data, a step of reconstructing data stored in the defective storage by executing a logical operation between the data and the parity data, and a step of replacing the parity data stored in the storage by reconstructed data.

## Description

### BACKGROUND OF THE INVENTION

### TECHNICAL FIELD

The present invention is related to a method for data reconstruction and a data storage system, and particularly to a method and apparatus for reconstructing the data stored in a broken data storage device which is part of a plurality of data storage devices.

### BACKGROUND ART

As the amount of data treated by a computer increases, the increase of the throughput of a HDD (Hard Disk Drive) and the increase of reliability of data storage are needed. The RAID (Redundant Array of Inexpensive Disks) subsystem is one of the systems which answer such need. This subsystem is one in which a plurality of HDDs is operated apparently as one HDD when viewed from the point of a system, thereby to achieve a large storage capacity and increase the throughput. Further, it is also a subsystem in which, by ensuring high reliability, namely, by providing parity data, data stored in a HDD can be reconstructed when the HDD fails. The data reconstruction is achieved by calculating redundant data called parity data from data stored in the HDD, and storing the redundant data in the HDD.

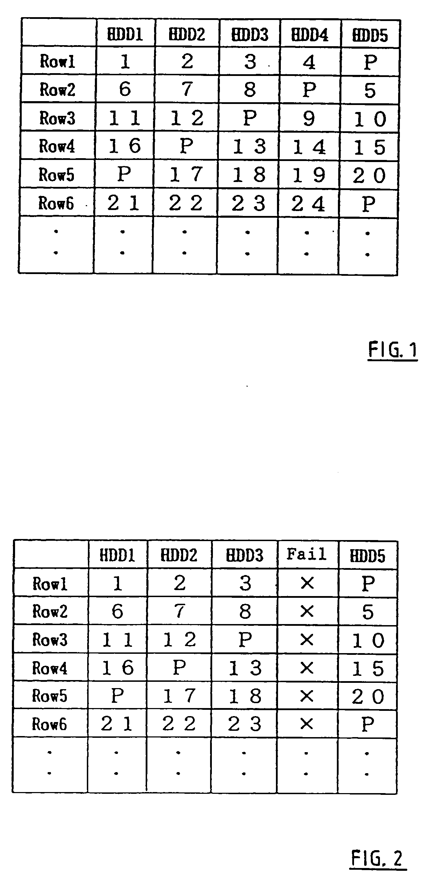

The reconstruction of data stored in a broken HDD is performed as follows. Fig. 1 is a figure showing the construction of the data blocks which are stored in five HDDs in a RAID5, respectively. The RAID5 represents a system in which generated parity data is distributively stored in the respective HDDs. In this figure, "P" represents parity data. In addition, the numbers (1 to 24) means the block numbers of data. A data block means the amount of data which is collectively handled by a HDD. This data amount is independently set for each subsystem, for instance, to one byte to several sectors (usually, one sector is 512 bytes). By distributively storing data in four HDDs, and storing the parity data generated from those data in the remaining one, as described above, a lateral line of data array ("Row") is formed.

In this case, the parity data in Row 1 is generated by the following steps.
Step 1: (1 EX-OR 2)=P1
Step 2: (Pl EX-OR 3)=P2
Step 3: (P2 EX-OR 4)=P
   (EX-OR means exclusive-OR.)

That is, the parity data is calculated through the three steps of obtaining Pl by an exclusive-OR operation of data stored in the HDD 1 and HDD 2, obtaining P2 by an exclusive-OR operation of Pl and the data stored in the HDD 3, and then obtaining P by the exclusive-OR of P2 and the data stored in the HDD 4. This parity data is data necessary for reconstructing the data in any broken HDD.

Fig. 2 is a figure showing the data construction when the HDD 4 breaks down. Since the HDD 4 is faulty, the data of a block 4 is lost in Row 1, the parity data is lost in Row 2, and the data of a block 9 is lost in Row 3. To read the block 4 of Row 1 recorded in the broken HDD 4, the data of the block 4 is reconstructed through the following three steps.
Step 1: (1 EX-OR 2)=P1
Step 2: (Pl EX-OR 3)=P2
Step 3: (P2 EX-OR P)=4

As described above, since there is provided redundant data named parity data, even if any of a plurality of HDDs breaks down, the data stored in the broken HDD can be reconstructed by carrying out exclusive-OR operations of the data stored in the other normal HDDs. The exclusive-OR operations are executed by a parity generator connected to the HDDs via the data buses. The temporary data Pl and P2 determined by the exclusive-OR operations are temporarily stored in a parity memory connected to the parity generator.

However, in the reconstruction of data required when there is a broken HDD, a step of transferring the data stored in the other HDDs to the data bus needs to be performed a plurality of times. In the above example, three data transfers are required. The data transfers increase as the number of the HDDs of the system increases. Accordingly, the system performance in the data reconstruction would largely degrade as compared with that in the normal operation.

There is a conventional technique in which, in addition to the HDDs that are normally used, there is provided a backup HDD to be used for storing the reconstructed data when a HDD breaks down. This is a technique in which, in the data reconstruction, the data reconstructed from the data stored in the HDDs other than the broken HDD is stored in the backup HDD. In this technique, however, the backup HDD is not normally used, and thus the storage capacity of the whole data storage system decreases. This is not economical.

Thus, in the prior art, there was a problem that the speed of reading the data stored in HDDs slowed down as compared with the normal operation if there was a broken HDD. Moreover, there was a problem that the storage capacity of the whole system decreased if a backup HDD was provided.

Accordingly, in view of the above problems, it is an object of the present invention to suppress the degradation of the performance in the data reconstruction. Further, it is another object of the present invention to eliminate the need for further providing a redundant data storage device.

### SUMMARY OF THE INVENTION

The present invention provides a method in which, if a broken data storage device exists in a system having a plurality of data storage devices, the data stored in the broken data storage device is reconstructed based on the data stored in the other plurality of data storage devices, the method comprising a step of reading data from the plurality of data storage devices, a step of reading parity data from the data storage device in which the parity data is stored, a step of reconstructing the data stored in the broken data storage device by carrying out logical operations of the data and the parity data, and a step of storing the reconstructed data by replacing the parity data stored in the data storage device by the reconstructed data.

Also, a further invention provides a method in which, if a broken data storage device exists in a system having a plurality of data storage devices, the data stored in the broken data storage device is reconstructed based on the data stored in the other plurality of data storage devices, the method comprising a step of reading data blocks from the plurality of data storage devices, a step of specifying an address region to read the parity data block stored in the address region from the data storage device in which the parity data block is stored, a step of obtaining a reconstructed data block by carrying out logical operations of the data blocks and the parity data block, and a step of storing the reconstructed data block in the address region.

These inventions may have a further step of preparing a management table indicating whether the parity data stored in the data storage device has been replaced by the reconstructed data. Specifically, this management table indicates the range of the address region and whether or not the reconstructed data is stored within the range.

By referencing the management table, it is determined whether or not the reconstructed data block is stored in the address region. If the reconstructed data is stored, it is outputted to the outside. If the reconstructed data block is not stored, the reconstructed data block is obtained based on the data blocks stored in the data storage devices other than the broken data storage device and the parity data block stored in the address region, and it is outputted to the outside. At this point, the reconstructed data block is stored in the address region and the management table is updated.

Moreover, a further invention provides a data storage system having a plurality of data storage means in which, by storing parity data, the data stored in any of the data storage means can be reconstructed even if that data storage means breaks down, the system comprising a plurality of data storage means in which data and parity data are stored, data buses connected to the data storage means, calculation means connected to the data buses for generating a reconstructed data based on the data and parity data stored in the other plurality of data storage means, thereby to reconstruct the data stored in any data storage means, and means for writing the reconstructed data to replace the parity data stored in the data storage means.

In addition, a further invention provides a data storage system having a plurality of data storage means in which, by storing parity data, the data stored in any of the data storage means can be reconstructed even if that data storage means breaks down, the system comprising first data storage means having a parity data block stored in a specified address region, at least second data storage means in which data blocks are stored, calculation means for generating a reconstructed data block based on the parity data block stored in the first data storage means and the data blocks stored in the remaining second data storage means, thereby to reconstruct the data block stored in any second data storage means, and means for storing the reconstructed data block in the address region.

### BRIEF DESCRIPTION OF THE DRAWINGS

Fig. 1 is a figure showing the construction of data stored in each of five HDDs in a RAID5;
Fig. 2 is a figure showing the construction of data blocks when the HDD 4 breaks down;
Fig. 3 is a block diagram of a RAID system in which five HDDs are connected;
Fig. 4 is a figure showing the relationships between data replace statuses and specific tags;
Fig. 5 is a figure showing the construction of the management table for replacement of parity data; and
Fig. 6 is a figure showing a specific example of the management table for actual replacement of parity data.

### BEST MODE FOR CARRYING OUT THE INVENTION

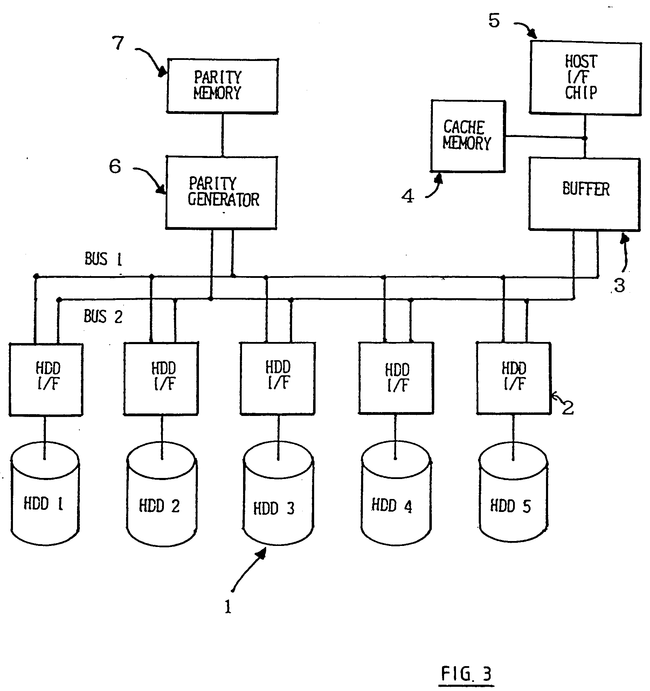

Now, the preferred embodiment of the present invention is described by taking a system, a so-called RAID5, as an example. Fig. 3 is a block diagram of a RAID system in which five HDDs are connected. To a plurality of data buses Bus 1 and Bus 2, a plurality of data storage means 1 is connected through an interface 2. To the data buses Bus 1 and Bus 2, one end of a buffer 3 is connected. The other end of the buffer 3 is connected to a cache memory 4 and a host interface 5. Further, to the data buses Bus 1 and Bus 2, a parity generator 6 is connected, and a parity memory 7 is connected to the parity generator 6. The data transfer in this system is controlled by a DMAC (Direct Memory Access Controller), not shown. In addition, the control and management in the whole system are performed by an MPU, not shown.

Each of the data buses Bus 1 and Bus 2 is made up of a plurality of (for instance, 16) data lines. Further, interface 2 enables free transfer between the data buses Bus 1, Bus 2 and the data storage means 1. The data storage means 1 is to store data and parity data, and it is described in this embodiment by taking a HDD (Hard Disk Drive), a typical storage device, as an example. However, it is to be understood that the data storage means is not limited to HDD, but it may be a magneto-optic disk, CD-ROM, DAT, or a semiconductor memory such as EEPROM.

The buffer 3 is to perform the data transfer between the host interface 5 and the plurality of data buses Bus 1 and Bus 2. The host interface 5 is to perform the data transfer between the system and the host computer. The cache memory 4 is to temporarily store the data transferred to the data buses Bus 1 and Bus 2 and outputted from the buffer 3, or the data transferred from the host computer through the host interface 5.

Further, the parity generator 6 is to reconstruct the data stored in any data storage means 1 by generating reconstructed data based on the data and the parity data which are stored in the other plurality of data storage means. In this embodiment, parity data is obtained by performing an exclusive-OR operation based on the data transferred to the data buses Bus 1 and Bus 2, or on the data stored in the parity memory 7. Although various calculation methods have been proposed for the generation of parity data, the typical exclusive-OR operation is used a memory in this embodiment. The parity memory 7 is a memory to temporarily store the parity data calculated by the parity generator 6.

Moreover, the parity generator 6 can fetch data from the two data buses Bus 1 and Bus 2, generate parity data from those data, and transfer it to the parity memory 7. It can also generate new parity data based on the data transferred to one data bus and the parity data read out from the parity memory 7, and store it again in the parity memory 7 or transfer it to the other data bus.

In addition, this system has a register, not shown, as management means. The register has a management table to be detailed later. The MPU, not shown, performs the referencing and rewriting of the contents of the management table. Description is now made to the circuit operation performed when a failure occurs in the RAID5, in which the generated parity data is distributively stored in the individual HDD. However, the present invention is not limited to the RAID5, but it may naturally be used in a disk array system having a function of reconstructing data, such as a RAID3 in which one HDD is defined as the HDD for storing parity data and all parity data are stored in this HDD.

As shown in Fig. 2, the reconstruction when the HDD 4 breaks down is described. Since the HDD 4 is broken, the data of a block 4 is lost in Row 1, the parity data is lost in Row 2, and the data of a block 9 is lost in Row 3. To read the block 4 in Row 1 stored in the broken HDD 4, the data of the block 4 is reconstructed through the following four steps.
Step 1: (1 EX-OR 2)=P1
Step 2: (Pl EX-OR 3)=P2
Step 3: (P2 EX-OR P)=4
Step 4: 4 → P

### (1) Step 1

From the HDD 1 and HDD 2, the data of the blocks 1 and 2 are read out, respectively, and transferred to the data buses Bus 1 and Bus 2. These transferred data blocks are inputted to the parity generator 6. The parity generator 6 generates a parity block Pl by calculating the exclusive-OR of the data of the blocks 1 and 2. The parity block Pl is stored in the parity memory 7.

### (2) Step 2

The data of the block 3 is read from the HDD 3 and transferred to any one data bus. The transferred data block is inputted to the parity generator 6. The parity generator 6 generates a parity block P2 by calculating the exclusive-OR of the block 3 and the parity block Pl stored in the parity memory 7. The parity block P2 is stored in the parity memory 7.

### (3) Step 3

By specifying an address region, the data of a parity block P stored in this region is read out from the HDD 5, and transferred to any one data bus. The transferred parity block P is inputted to the parity generator 6. The parity generator 6 generates a reconstructed data block A by calculating the exclusive-OR of the parity block P and the parity block P2 stored in the parity memory 7. The reconstructed data block A is the same as the data block stored in the broken HDD 4, and the data stored in the HDD 4 can be reconstructed by this. The reconstructed data block A is stored in the parity memory 7.

### (4) Step 4

The reconstructed data block A generated in step 3 is read from the parity memory 7, and transferred through the data bus to the HDD 5 in which the parity block P is stored. The reconstructed data block A is stored in the address region in which the parity block P of the HDD 5 is stored, thereby to replace the parity block P. That is, the reconstructed data block is stored in the above specified address region. In addition, the data block A reconstructed in step 3 may be directly transferred to the HDD 5 without being temporarily stored in the parity memory 7.

By the above steps, the data stored in the HDD 5 with respect to Row 1 is replaced by the data reconstructed from the parity data (the data corresponding to the data stored in the broken HDD 4 and having the same contents as that data). The status of the replacement by the parity data is controlled by such a management table as detailed below.

If the system receives from the outside of the system such as the host computer a request to read the data stored in a broken HDD, it determines from the management table whether the reconstructed data corresponding to the requested data is stored in the HDD. If the reconstructed data is stored in the HDD, the system outputs the reconstructed data to the host computer as the requested data. If the reconstructed data is not stored in the HDD, the system reconstructs the data stored in the broken HDD based on the data and the parity data stored in the other plurality of normal HDDs, and outputs the reconstructed data to the host computer. At this point, the reconstructed data is stored in the HDD in place of the parity data, and the contents of the management table are also renewed so that the contents of the specified address region indicate the reconstructed data.

Since the reconstructed data is stored in the address region in which the parity data has been stored, as described above, it is only needed to read the reconstructed data and outputs it to the host computer if the host computer again accesses already calculated data. Accordingly, a further parity calculation need not be performed, and thus the degradation of the system performance can be suppressed even if a broken HDD exists.

In addition, also for Row 3, data replacement is performed as in the above steps. For Row 2, data replacement need not be performed since the data stored in the broken HDD 4 is parity data and not the data read by the host computer.

If the broken HDD is replaced by a new normal HDD, the stored reconstructed data is again replaced by the parity data. There are possible two methods for that. In the first method, after the replacement to the new HDD, by calculating the exclusive-ORs of the data stored in the other HDDs, the data stored in the broken HDD is reconstructed and stored again in the new HDD. In the second method, since the reconstructed data is already replaced by the parity data stored in the HDD, data reconstruction is performed by copying the reconstructed data to the new HDD, and performing exclusive-OR operations only for the one which has not been replaced by the reconstructed data yet. The second method is preferred because the number of data transfers in the reconstruction decreases thereby to enhance the system performance.

In addition, if a broken HDD is replaced by a new HDD, and the data stored in the broken HDD is written to the new HDD, then the reconstructed data stored in the HDD is replaced again by the parity data since the reconstructed data need not be stored any more. This is accomplished by referencing the management table and storing the parity data in the address region in which the reconstructed data is stored.

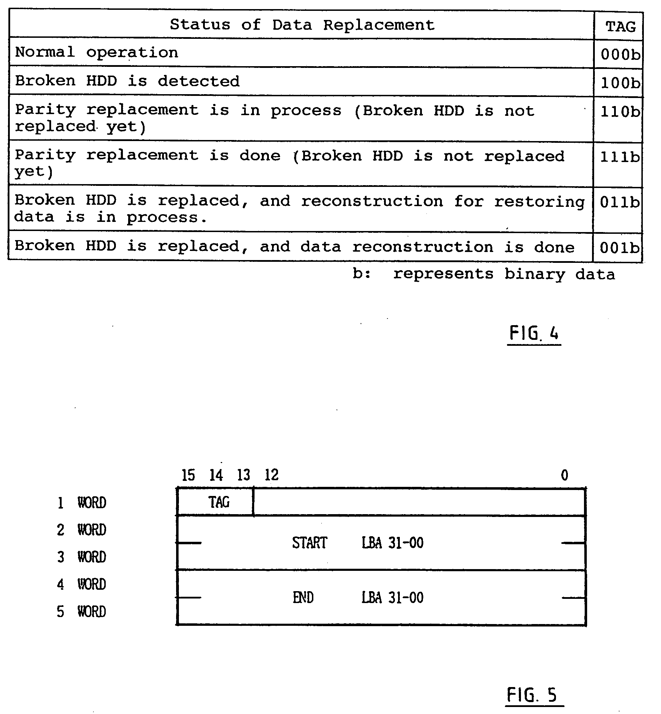

The management table indicating the status of the replacement by the parity data is described. This table shows the range of the address region and whether the data in the range has been changed through replacement from the parity data to the reconstructed data. In this embodiment, this table is written into five words of a 16-bit register. The status of replacement by the current parity data needs to indicate, at minimum, whether the data stored in the range of the address region is parity data. In an actual system, however, additional information on whether data replacement is in process is also necessary, and thus such information is indicated. The status of replacement is represented by a tag of three bits. This indicates whether the parity data has been replaced by the reconstructed data, whether an access has been made from the host and the parity data is now being replaced by the reconstructed data, and whether the broken HDD is replaced by a normal HDD and the reconstructed data is now being replaced by the parity data. Fig. 4 is a figure showing the relationship between the status of replacement of the parity data and a specific tag.

Fig. 5 shows the management table of replacement by parity data. In the first word of the 16-bit register, a 3-bit tag as shown in Fig. 4 is set. In the second to third words, the start address in the address region of the status indicated by the tag is set. Further, in the fourth to fifth words, the end address is set. This address is usually called LBA (Logical Block Address).

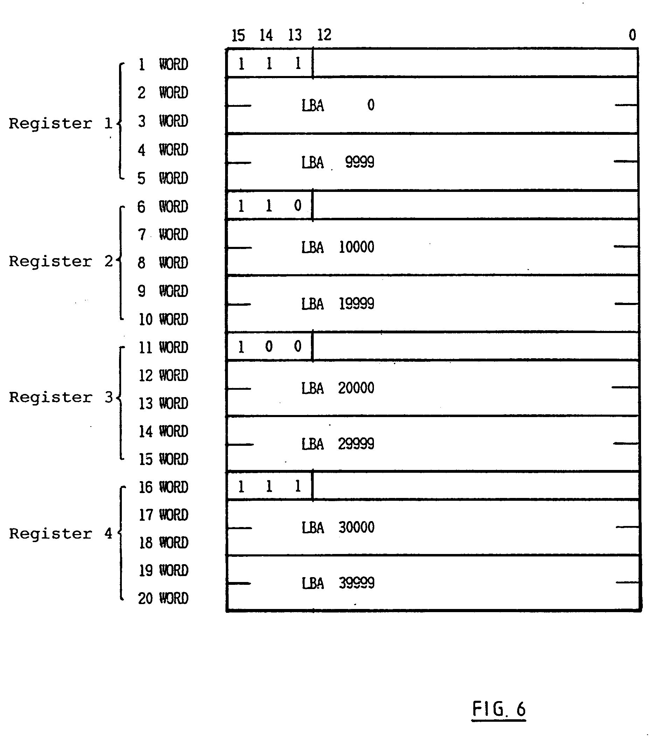

The management table actually includes a plurality of registers as described above. Fig. 6 shows a specific example of the management table of actual replacement by parity data. This that figure shows that the respective addresses are in the following statuses. That is, the range of address 0-9999 and the range of address 30000-39999 represent a status in which a broken HDD is still connected and parity replacement has been completed (register 1, register 4), the range of address 10000-19999 represents a status in which a broken HDD is still connected and parity replacement is in process (register 2), and the range of address 20000-29999 represents a status in which a broken HDD is still connected, but a replacement work is not started (register 3).

Such management table in this embodiment may be written into non-volatile not only registers but also non-volatile storage means, for instance, EEPROM or accessible HDD. In the present invention in which parity data and reconstructed data may be mixedly stored, it is needed to reliably store whether the data stored in a certain address is parity data or reconstructed data. If the management table is written into a non-volatile storage means, it is not lost even if the power is turned off by a power failure or the like, and thus safety is assured.

In addition, it is possible to freely set the range of an address region in which parity data is replaced by reconstructed data. To restore all the lost data of a broken HDD, it is only needed to specify the whole capacity of the HDD for the replacement range. However, the address space of a disk array system is tremendously large, and an enormous calculation time may be required if its all regions are subjected only to replacement. Accordingly, as replacement objects, only predetermined regions may be chosen which have a high possibility that the host computer may often accesses them. Further, it is also possible to select to execute parity data replacement independently of the access from the host computer. When the access from the host computer is not often, it is also effective to previously perform the replacement in expectation of the next access.

### INDUSTRIAL APPLICABILITY

As described above, in the present invention, parity data stored in a data storage device is replaced by reconstructed data and the reconstructed data is stored, and thus the reduction of performance in the data reconstruction can be suppressed without further providing a redundant data storage device such as a backup drive.

## Claims

1. A method in which, if a broken data storage exists in a system having a plurality of data storage devices, the data stored in the broken data storage device is reconstructed based on the data stored in the other plurality of data storage devices, said method comprising of the steps of:
reading data from the plurality of data storage devices;
reading parity data from the data storage device in which said parity data is stored;
reconstructing the data stored in the broken data storage device by carrying out logical operations of said data and said parity data; and
storing said reconstructed data by replacing said parity data stored in said data storage device by said reconstructed data.

2. A method as set forth in Claim 1 further comprising a step of preparing a management table indicating whether said parity data stored in said data storage device has been replaced by said reconstructed data.

3. A method as set forth in Claim 2 further comprising the steps of:
receiving from the outside of the system a request to read the data stored in said broken data storage device;
referencing said management table to determine whether said reconstructed data corresponding to said requested data is stored in said data storage device; and
outputting said reconstructed data to the outside if said reconstructed data is stored in said data storage device.

4. A method as set forth in Claim 2 further comprising the steps of:
receiving from the outside of the system a request to read the data stored in said broken data storage device;
referencing said management table to determine whether said reconstructed data corresponding to said requested data is stored in said data storage device;
if said reconstructed data is not stored in said data storage device, calculating a reconstructed data based on said data stored in said data storage devices other than said broken data storage device and said parity data;
outputting said reconstructed data to the outside;
storing said reconstructed data by replacing said parity data stored in said data storage device by said reconstructed data; and
updating said management table.

5. A method as set forth in Claim 1, 2, 3 or 4 further comprising a step of: if said broken data storage device is replaced by new said data storage device, said reconstructed data is stored by replacing said parity data stored in said data storage device by said reconstructed data.

6. A method in which, if a broken data storage device exists in a system having a plurality of data storage devices, the data stored in the broken data storage device is reconstructed based on the data stored in the other plurality of data storage devices, said method comprising the steps of:
reading data blocks from the plurality of data storage devices;
specifying an address region to read from the data storage device in which parity data blocks are stored, said parity data block stored in said address region;
obtaining a reconstructed data block by carrying out logical operations of said data blocks and said parity data block; and
storing said reconstructed data block in said address region.

7. A method as set forth in Claim 6 further comprising a step of preparing a management table indicating the range of said address region and whether or not said reconstructed data block is stored in said address region.

8. A method as set forth in Claim 7 further comprising a step of referencing said management table if the system receives a request to read the data block stored in said broken data storage device.

9. A method as set forth in Claim 8 further comprising:
a step of referencing said management table to determine whether or not said reconstructed data block is stored in said address region; and
a step of outputting said reconstructed data block to the outside if said reconstructed data block is stored.

10. A method as set forth in Claim 8 further comprising the steps of:
referencing said management table to determine whether or not said reconstructed data block is stored in said address region;
if said reconstructed data block is not stored, calculating a reconstructed data block based on said data blocks stored in said data storage devices other than said broken data storage device and said parity data block stored in said address region;
outputting said reconstructed data block to the outside;
storing said reconstructed data block in said address region; and
updating said management table.

11. A method as set forth in Claim 6, 7, 8, 9 or 10 further comprising a step of storing said parity data block in said address region if the broken data storage device is replaced by new said data storage device.

12. A data storage system having a plurality of data storage means in which, by storing parity data, the data stored in any broken data storage means of said plurality of data storage means can be reconstructed, said system comprising:
a plurality of data storage means in which data and parity data are stored;
data buses connected to said data storage means;
calculation means connected to said data storage means and for reconstructing said data stored in any said data storage means generating a reconstructed data based on said data stored in the other said plurality of data storage means and said parity data; and
means for writing said reconstructed data to replace said parity data stored in said data storage means.

13. A system as set forth in Claim 12 further comprising management means for indicating whether said parity data stored in said data storage means has been replaced by said reconstructed data.

14. A data storage system having a plurality of data storage means in which, by storing parity data, the data stored in any broken data storage means of said plurality of data storage means can be reconstructed, said system comprising:
first data storage means having a parity data block stored in s specified address region;
at least one second data storage means in which data blocks are stored;
calculation means for reconstructing said data block stored in any said second data storage means by generating a reconstructed data block based on said parity block stored in said first data storage means and said data blocks stored in remaining said second data storage means; and
means for storing said reconstructed data blocks in said address region.

15. A system as set forth in Claim 14 further comprising management means for indicating the range of said address region and whether or not said reconstructed data is stored in said address region.
